# DEMANDE DE BREVET EUROPEEN

(11) **EP 1 115 010 A1**
(43) Date de publication de la demande: **11.07.2001**
(21) Numéro de dépôt: 01400008.7
(22) Date de dépôt: 04.01.2001
(51) Int. Cl.: G01S 5/14, G01C 15/00, E01C 23/00

(54) **Procédé pour déterminer les distances de visibilité d'une voie de circulation**

(30) Priorité: 05.01.2000 FR 0000086
(71) Demandeur: Société Pour L' Auscultation Multifonctionnelle Des Reseaux D'Autoroutes, 78286 Guyancourt cedex (FR)
(72) Inventeur: Leycure, Pascal, 92190 Meudon (FR)
(74) Mandataire: Caron, Gérard

(57) **Abrégé**

Au cours d'une première phase de procédé (E1 à E9) se déroulant par déplacement le long de ladite voie, on relève les profils en long et en plan de la voie de circulation en prenant des premiers échantillons (fichier L) représentant les coordonnées spatiales de premiers points de relèvement successifs sur la voie de circulation, et simultanément, on relève le profil en travers de la voie en prenant en des seconds points de relèvement successifs des seconds échantillons (fichier K) représentant, des coordonnées spatiales décrivant des obstacles latéraux.

Les premiers et seconds échantillons sont affectés de bases de corrélation établies en fonction du temps écoulé depuis le début du déplacement, et/ou de la distance par rapport au point de départ du déplacement.

Puis, dans une seconde phase de procédé, certains des premiers et seconds échantillons sont corrélés (E14; E19) pour rapporter toutes les coordonnées spatiales à l'une des bases de corrélation et on crée (E11, E15; E20, E21) des jeux de coordonnées spatiales décrivant les profils en long, en plan et en travers de la voie.

Enfin, on calcule (E16, E17; E22) les distances de visibilité en utilisant le jeu de coordonnées spatiales de chaque point et ceux des points situés en aval.

## Description

La présente invention est relative à un procédé pour déterminer les distances de visibilité d'une voie de circulation.

La distance de visibilité est l'une des données importantes nécessaires pour équiper une voie de circulation de ses signalisations horizontales et verticales permettant de conférer à cette voie un maximum de sécurité pour les usagers. Dans la plupart des pays, il existe des normes prévoyant un certain nombre de valeurs limites à respecter, notamment de la distance de visibilité de dépassement, en fonction d'une vitesse de circulation considérée comme une référence. En France, pour ce qui concerne les routes à grande circulation et les autoroutes, ces normes sont désignées notamment par l'acronyme ARP pour "Aménagement des Routes Principales", auxquelles on pourra se référer pour plus de détails.

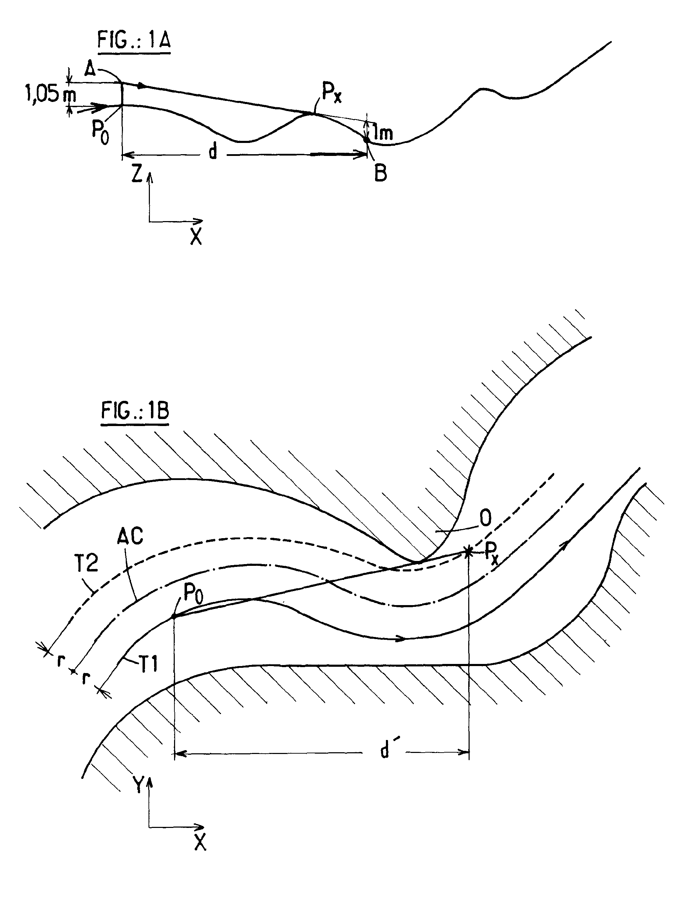

La figure 1A des dessins annexés montre comment ces normes définissent la distance de visibilité en fonction du "profil en long" de la voie de circulation, c'est-à-dire selon l'axe x de la voie. En considérant un point P₀ de la voie, on détermine à 1,05m au-dessus du sol (hauteur normalisée selon l'axe z) un point d'observation A. La distance de visibilité d au point P₀ est alors définie comme étant la distance entre P₀ et un autre point Pₓ dit "point de visée", au delà duquel un obstacle de lm de hauteur devient invisible pour l'observateur posté en A. Par exemple, le point B plus en aval sera invisible pour l'observateur au passage du point P₀. Le point Pₓ peut également être situé à une certaine hauteur par rapport à la chaussée. Il est à noter que les normes définissant la distance de visibilité peuvent être différente, par exemple d'un pays à l'autre.

La figure 1B montre comment est définie la distance de visibilité compte tenu du corridor de vision dans le plan de la voie de circulation. Les véhicules sont supposés circuler sur deux tracés T1 et T2, un pour chaque sens de circulation, écartés de l'axe central AC de la route d'une distance r fixée à deux mètres par les normes. Un observateur supposé regarder la route à partir du point de passage P₀ ne pourra voir un obstacle se trouvant dans le couloir opposé de la voie de circulation que jusqu'à un point Pₓ situé sur le tracé T2, par rapport à un obstacle latéral situé, dans l'exemple considéré, en un point 0. Dans ce cas, la distance de visibilité sera d'.

On notera cependant que la distance de visibilité est mesurée sur un tracé généralement curviligne correspondant à celui de la route, les projections d et d' des figures 1A et 1B n'étant dessinées que pour montrer comment les distances curvilignes de visibilité sont déterminées par les points de relèvement de la route. Quoi qu'il en soit, pour déterminer la nature et la forme de la signalisation routière, on travaille avec ces distances de visibilité curvilignes auxquelles on associe des valeurs minimales de distance liées à toutes sortes de conditions topographiques et imposant la signalisation à choisir pour garantir la sécurité.

Par ailleurs, les normes tiennent compte d'une vitesse de référence que l'on suppose adoptée par 85% des usagers. Cette vitesse de référence varie naturellement en fonction de la topologie locale (virages, pentes etc.) et la détermination des distances de visibilité doit tenir compte de cette topologie. On comprend également qu'en fonction de la vitesse de référence, plusieurs distances de visibilité doivent être déterminées lors du relevé des caractéristiques de la route, par exemple celles relatives à la visibilité en virage, sur un obstacle situé sur la chaussée ou sur un carrefour plan, la visibilité lors d'un dépassement, etc..

Ce qui précède n'est qu'un très bref rappel des règles édictées par les normes précitées et pour plus de détails, il y a lieu de se référer aux textes concernés.

Par le document FR 2 696 307 (EP 0 591 072), on connaît un procédé pour recueillir et archiver des données relatives à des chaussées et autres voies de circulation. Ce procédé consiste à filmer, à l'aide d'une caméra vidéo, le tronçon de route à étudier, la caméra étant placée sur un véhicule de mesure parcourant le tronçon en question. Les images prises sont visualisées sur un moniteur et enregistrées sur un magnétoscope avec, le cas échéant, une incrustation de données complémentaires de repérage et d'identification, fournies par un incrustateur vidéo. Ces données complémentaires peuvent comprendre des lignes de repère, des points de référence et des indications de distance à partir d'un point d'origine. L'ensemble de ces données et images est stocké sur une cassette vidéo, afin de pouvoir être analysé ultérieurement.

Dans le cas de ce procédé, l'opérateur chargé de l'analyse des données doit baser tous les éléments de son analyse sur la lecture des images vidéo, ce dont il résulte que les résultats d'analyse sont fort imprécis. En particulier, il n'est pas possible par ce procédé de la technique antérieure, de faire des calculs pour déterminer d'emblée et avec la précision requise, les distances de visibilité nécessaires pour implanter une signalisation routière adéquate.

L'invention a pour but de fournir un procédé de détermination de la distance de visibilité ne présentant pas les inconvénients de la technique antérieure.

Elle a donc pour objet un procédé pour déterminer les distances de visibilité d'une voie de circulation présentant les caractéristiques de la revendication 1.

Grâce à ces caractéristiques, il est possible d'exécuter la première phase du procédé à l'aide d'un véhicule de mesure qui peut s'insérer dans la circulation normale empruntant la voie de circulation dont il s'agit de déterminer les distances de visibilité. En outre, le nombre d'échantillons pris sera plus grand par unité de distance, lorsque le véhicule est contraint de rouler à vitesse réduite, notamment lorsque les difficultés de la route (virages, pentes, tracé en ville) l'exigent.

En outre, les échantillons relevés portant sur les profils de la voie de circulation permettent une analyse très fine de la topographie de la route et par conséquent un calcul extrêmement précis de toutes les distances de visibilité.

Enfin, le procédé n'employant aucune méthode de prise de vue par une caméra, il peut être exécuté même si au devant du véhicule, l'horizon est bouché par exemple par un camion ou un autre obstacle mobile ou fixe.
D'autres particularités du procédé de l'invention sont définies dans les sous-revendications.

D'autres caractéristiques et avantages de l'invention apparaîtront au cours de la description qui va suivre, donnée uniquement à titre d'exemple et faite en se référant aux dessins annexés sur lesquels:
- les figures 1A et 1B, déjà décrites, sont des diagrammes explicatifs montrant comment est définie une distance de visibilité;
- la figure 2 est une vue très schématique d'un véhicule destiné à relever les données d'un tronçon de route à étudier selon le procédé de l'invention, la figure montrant l'équipement embarqué essentiel nécessaire à cet effet;
- la figure 3 montre, également très schématiquement, l'agencement de capteurs latéraux montés sur le véhicule représenté sur la figure 2;
- la figure 4 est un organigramme général illustrant un premier mode de mise en oeuvre du procédé selon l'invention;
- les figures 5A à 5D illustrent graphiquement certaines opérations faites durant l'exécution de ce premier mode de mise en oeuvre;
- les figures 6 et 7 sont des organigrammes de deux sous-programmes de calcul du programme illustré sur la figure 4;
- la figure 8 est un diagramme d'un profil de la route illustrant le déroulement du sous-programme représenté sur la figure 7;
- la figure 9 représente l'organigramme d'une deuxième mode de mise en oeuvre de l'invention; et
- la figure 10 est une représentation en trois dimensions d'une route dont les caractéristiques ont été obtenues pendant l'exécution du mode de mise en oeuvre de la figure 9, la figure illustrant également la détermination d'une distance de visibilité.

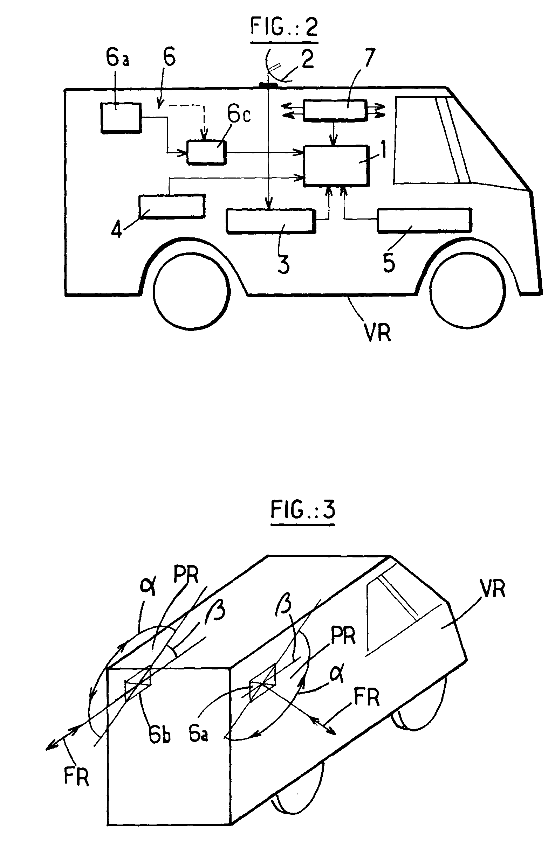

On va d'abord se référer à la figure 2 qui représente schématiquement un véhicule de repérage VR destiné à recueillir les données qui sont ultérieurement utilisées pour le calcul des distances de visibilité. Ce véhicule comprend une unité centrale 1 de collecte de données, pouvant être mise en oeuvre sous la forme d'un ordinateur personnel par exemple. Cette unité centrale 1 est notamment pourvue d'une unité de mémoire capable d'enregistrer des fichiers de données à exploiter de préférence ultérieurement après achèvement de la tournée effectuée par le véhicule VR pour le relevé d'un tronçon de route donné.

L'unité centrale 1 reçoit de l'information de plusieurs unités périphériques. Tout d'abord, un système de positionnement global différentiel 2, 3 connu sous le sigle DGPS, fournit les données de localisation du véhicule au cours de ses déplacements. De tels systèmes sont désormais disponibles dans le commerce.

L'unité DGPS fournit notamment à l'unité centrale 1 la position en X, Y et Z du véhicule par rapport à un système de coordonnées dont l'origine est un point de référence ayant des coordonnées très précisément connues. Ce point de référence peut être le point de départ du véhicule pour effectuer une campagne de mesure sur un trajet à étudier.

L'unité centrale 1 est également connectée à une centrale d'inertie (ou centre d'attitudes) 4 et à un odomètre 5 qui permettent de fournir, de façon redondante avec le système DGPS, des données de localisation du véhicule, notamment pour suppléer à ce système, lorsque la réception du système GPS est défaillante ou impossible en raison des conditions locales de réception, notamment.

Le véhicule de repérage VR est également équipé d'un système 6 de détection par télémétrie d'obstacles latéraux (voir en particulier la figure 3). Ce système est raccordé à l'unité centrale 1 et comprend notamment deux capteurs 6a et 6b placés respectivement de chaque coté du véhicule, par exemple dans les angles supérieurs arrière de ses parois latérales. Ces capteurs 6a et 6b sont connectés à une unité de traitement 6c et ils sont capables d'émettre un rayonnement optique ou un autre rayonnement électromagnétique (laser ou radar, par exemple) et de détecter le rayonnement réfléchi par des obstacles latéraux présents le long de la route afin de fournir une information de présence, de forme et de localisation de ces obstacles.

Plus précisément, les capteurs 6a et 6b sont montés mobiles sur des supports motorisés (non représentés) solidaires de la carrosserie du véhicule VR. Le mouvement de chaque capteur 6a et 6b (figure 3) est défini de telle façon que le faisceau de rayonnement FR qu'il émet balaye un plan de rayonnement PR avec un angle d'ouverture α donné qui peut être de 180°, par exemple. De ce fait, tout obstacle latéral devant lequel se déplace le véhicule de repérage VR sera détecté, tant en présence qu'en distance par rapport au tracé selon lequel le véhicule se déplace. De préférence, afin de pouvoir capter le rayonnement réfléchi par des objets même d'étendue horizontale très faible (poteaux, arbres etc.), le plan de rayonnement PR est incliné d'un certain angle β par rapport à l'horizontale.

Les moyens de mesure que l'on vient de décrire sont à même de collecter en des points de relèvement successifs des échantillons de coordonnées spatiales représentant le profil en plan, le profil en long et le profil en travers de la voie de circulation.

Pour pouvoir exploiter ces échantillons, il convient de leur affecter par type de profil relevé une base de corrélation. Selon une caractéristique importante de l'invention, cette base de corrélation peut être établie en fonction du temps écoulé depuis le début du relèvement (point de départ du véhicule) et/ou en fonction de la distance parcourue depuis le point de départ.

Dans l'exemple de mise en oeuvre du procédé décrit ci-après, on a choisi d'utiliser une base de corrélation en fonction du temps pour les profils en plan et en long et une base de corrélation en fonction de la distance parcourue pour le profil en travers. En ce qui concerne ce dernier profil, le choix de la base de corrélation de distance présente l'avantage de ne pas trop espacer les prises successives d'échantillons, lorsque le véhicule roule à une vitesse relativement soutenue sur une ligne droite par exemple.

Toutefois, les bases de corrélation peuvent être choisies différemment, l'exemple décrit ci-après n'étant pas limitatif.

Ainsi, selon un aspect important de l'invention, le véhicule de repérage VR est également équipé d'une base de temps 7. Celle-ci est destinée à rythmer le travail des unités portées par le véhicule de manière à commander des prises d'échantillons de profil en long et en plan à des intervalles de temps régulièrement espacés dans le temps. En d'autres termes, chaque unité du véhicule, chargée de relever une information concernant ces profils, engendre une suite de signaux de mesure en synchronisme avec la production des suites de signaux de mesure des autres unités.

Il en résulte qu'au cours d'une tournée de relèvement, des points de relèvement des profils en long et en plan sont pris à des intervalles régulièrement espacés dans le temps, chaque point relevé comportant des échantillons exprimés directement en coordonnées géographiques.

Cependant, les échantillons concernant les obstacles latéraux par rapport à la route sont relevés sur une base de corrélation de distance.

Les données ainsi relevées pour chaque point de relèvement sont stockées dans l'ordre de leur prise dans des fichiers de la mémoire de l'unité centrale 1. Après la tournée, ces fichiers représentent la trajectoire graphique brute du véhicule sur le tronçon étudié associée au "corridor" délimité par les obstacles latéraux.

Selon une autre aspect de l'invention, les échantillons du profil en long sont corrélés avec les échantillons de profil en travers, par exemple par interpolation temporelle en les rapportant à l'une des bases de corrélation. Dans l'exemple décrit, les échantillons sont rapportés sur la base de corrélation en fonction du temps, mais ceci n'est pas limitatif.

On obtient ainsi, pour chaque point de relèvement un jeu de coordonnées spatiales, les jeux successivement relevés étant représentatifs des trois profils de la voie de circulation étudiée.

On décrira dans la suite deux méthodes d'exploitation de ces jeux de coordonnées spatiales, l'une étant appelée "méthode 2x2D" (D pour dimension) et l'autre "méthode 3D").

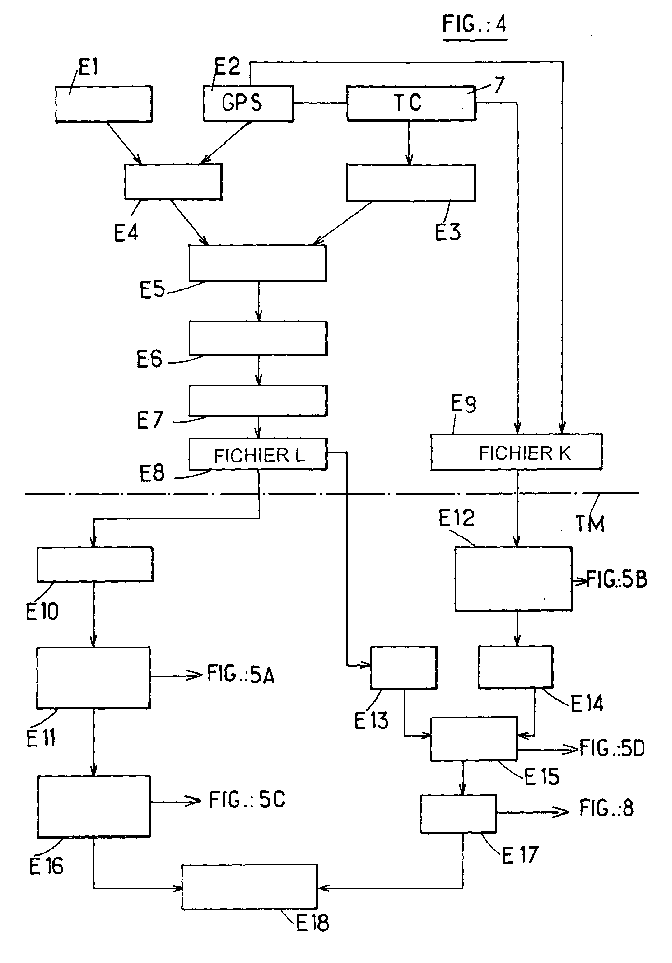

On va maintenant décrire un mode de mise en oeuvre du procédé de l'invention en exposant ses deux phases, la deuxième phase étant constituée par la méthode 2x2D. Pour cela, on se référera d'abord à la figure 4.

On notera que cette figure est barrée d'un trait mixte TM séparant les deux phases du procédé selon l'invention, la première phase consistant à effectuer des opérations (en haut de la figure) à bord du véhicule VR, la seconde phase consistant à exploiter les informations collectées pendant la première phase et notamment à calculer les distances de visibilité recherchées. Ces phases peuvent être exécutées séparément dans l'espace et dans le temps. La seconde phase n'est donc pas nécessairement exécutée à bord du véhicule, mais on peut la mettre en oeuvre ultérieurement, par exemple dans les bureaux de l'entreprise chargée de l'étude de la route.

Il est à noter également que les étapes de procédé qui vont être décrites ci-après se déroulent simultanément pour certaines d'entre elles ou bien les unes après les autres.

Ceci étant précisé, à l'étape E1 du procédé, le véhicule VR prend les coordonnées en X, Y et Z du point de référence (point de départ) à l'aide du système DGPS 2, 3. Puis, le véhicule prend la route à étudier.

A chaque top de la base de temps 7, un relevé de GPS est effectué au cours de l'opération E2.

Simultanément, à chaque top de la base de temps 7, l'opération E3 correspond au relevé en redondance par la centrale inertielle 4 et l'odomètre 5 des coordonnées du point de relèvement en cours.

L'opération E4 consiste à rapporter les coordonnées du point en cours relevées par l'opération E2 à la base de corrélation de temps dont le point d'origine ou de référence est mesuré au cours de l'étape E1.

Les échantillons relevés sont ensuite examinés au cours de l'étape E5 pour sélectionner parmi eux ceux qui pour chaque point relevé à chaque top constituent la meilleure information parmi les données rendues disponibles au cours des étapes E2 et E3. L'étape E6 consiste, au fur et à mesure du relèvement de la route, à introduire dans un fichier provisoire de la mémoire de l'unité de traitement 1, une suite de valeurs de coordonnées spatiales X, Y et Z assorties de codes temporels TC des points relevés, valeurs que l'on désignera ci-après par "quadruplets".

Une conséquence particulièrement avantageuse de l'invention consiste en ce que le relèvement des profils en long et en plan est effectué à l'aide de tops qui commandent les prises d'échantillons successives et qui sont régulièrement espacées dans le temps (par exemple une prise tous les 5 mètres à 50 km/h). Le processus de relèvement peut être réalisé alors que le véhicule VR est inséré dans la circulation normale, le nombre d'échantillons par unité de distance augmentant avec la réduction de la vitesse du véhicule. Cela veut dire que si la configuration de la route nécessite une telle réduction, par exemple lorsqu'elle est sinueuse ou lorsque le véhicule parcourt les artères d'une ville, le nombre d'échantillons ou points de relèvement sera plus grand par unité de distance que si la route était droite. Cependant, ceci est favorable étant donné que dans ces circonstances, il est utile de relever avec une résolution accrue la topographie de la route parcourue et de l'espace traversé pour pouvoir définir les distances de visibilité avec une finesse accrue.

Par ailleurs, si le véhicule VR est inséré dans la circulation normale, il doit bien entendu respecter les règles de la circulation. Il peut alors arriver que le véhicule doive s'arrêter (à un feu rouge par exemple). Pendant l'arrêt, le procédé continue à prendre des échantillons avec la même fréquence de sorte que le fichier constitué pendant l'étape E6 de procédé peut, le cas échéant, contenir de l'information redondante qu'il convient d'éliminer pour ne pas charger le travail d'analyse à exécuter ultérieurement. Cette redondance peut également provenir d'autres raisons.

Il est à noter qu'en ce qui concerne le profil en travers, la prise d'échantillons est faite avec une résolution suffisante en distance pour que le procédé demeure indépendant de la vitesse au cours du relevé.

Une opération (étape E7) du procédé consiste, à l'aide d'algorithmes connus en soi, de supprimer tous les quadruplets redondants emmagasinés dans le fichier provisoire constitué au cours de l'opération E6. Une opération E8 consiste alors à ranger les quadruplets ainsi triés dans un fichier de quadruplets utilisables pour l'analyse qui va en être faite ultérieurement. Ce fichier sera appelé "fichier L" par la suite.

Le procédé de l'invention consiste également, au cours d'une étape de procédé E9, de faire un relevé du profil en travers de la voie de circulation. Comme déjà indiqué ci-dessus, le véhicule VR comprend à cet effet, les capteurs 6a et 6b. Les données relevées sont consignées dans un fichier, appelé "fichier K", sous forme d'échantillons de profil en travers dont chacun comprend la position correspondant au point de relèvement et prise pendant l'étape E2, la distance à l'obstacle latéral d'un côté de la route retenue par le capteur 6a, la distance à l'obstacle latéral de l'autre côté de la route retenue par le capteur 6b, les coordonnées des points correspondants et l'abscisse "curviligne" de la donnée DGPS correspondante par rapport au point initial de référence, cette dernière donnée représentant la relation avec la base de corrélation de distance.

Bien que cela ne soit pas représenté sur la figure 4, le fichier K peut être soumis à une élimination d'information redondante de façon analogue au processus mis en oeuvre au cours de l'étape E7.

Les fichiers K et L ainsi constitués peuvent être consignés par l'unité centrale 1 sur tout support d'enregistrement connu pour permettre une exploitation ultérieure notamment par la détermination des distances de visibilité calculées dans chacun des points de relèvement.

La seconde phase du procédé selon l'invention exploite les jeux de coordonnées spatiales collectés au cours de la première phase du procédé selon l'invention. Cette seconde phase consiste à exécuter une étape E10 de calcul, à partir des échantillons du fichier L, à savoir la coordonnée X et l'altitude Z de chaque point de relèvement en fonction de l'abscisse curviligne correspondante. Puis, les valeurs des coordonnées sont utilisées, au cours d'une étape E11 de procédé, pour tracer une ligne brisée en deux dimensions dont les sections rejoignent les points de relèvement P_{x,} Pₓ₊₁, Pₓ₊₂, Pₓ₊₃....Pₓ₊ₙ, ce qui donne lieu à la création d'une image telle que représentée sur la figure 5A. Ces calculs et le traçage de la ligne brisée peuvent être réalisés à l'aide d'outils informatiques existants utilisés par exemple dans le domaine de la conception assistée par ordinateur (CAO).

On rappelle que les échantillons du fichier L ont été captés à des intervalles successifs de temps régulièrement espacés, de sorte que les distances entre les points dépendent de la vitesse du véhicule au moment du relevé.

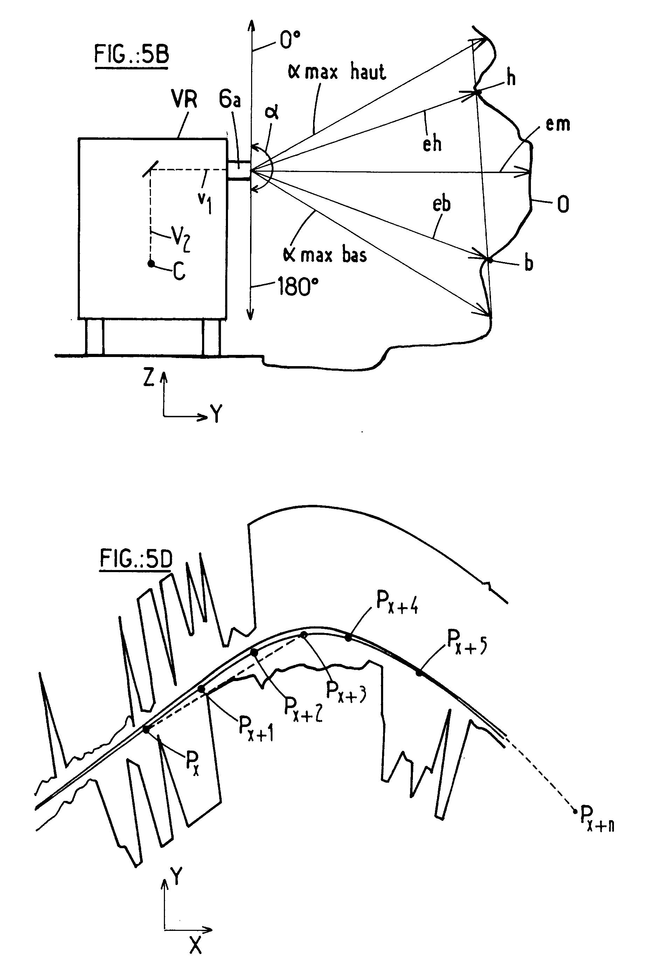

Les capteurs 6a et 6b balayent le plan incliné respectivement sur un angle de 180°. Pour fixer les idées, en prenant des échantillons par pas de 1° et ce avec une fréquence de 25 Hz, le fichier K peut contenir un très grand nombre d'échantillons qui sont loin d'être tous nécessaires pour obtenir l'information de profil en travers souhaitée, la figure 5B en illustrant le principe.

Au cours d'une étape E12, il est donc procédé de préférence à une compression de l'information contenue dans le fichier K pour ne dégager que les échantillons qui sont intéressants. Cette étape peut être effectuée de la même façon pour les jeux d'échantillons pris par chaque capteur 6a ou 6b.

Sur la figure 5B, on suppose qu'un obstacle latéral 0 à droite de la route a donné lieu à la formation d'échantillons de distance par rapport au capteur 6a. Sur un cycle de balayage de 180°, 180 échantillons ont été formés. Dans un tel groupe d'échantillons, le programme sélectionne ceux désignés par eₕ et e_{b} respectivement (un échantillon haut et un échantillon bas) ayant les plus petites valeurs de distance, respectivement de part et d'autre de l'échantillon du milieu eₘ pris lorsque l'angle de balayage α était de 90°. Selon une variante, illustrée sur la figure 5B, afin de réduire l'information à traiter, le balayage du capteur peut être restreint à un secteur angulaire préfixé et de préférence réglable, de part et d'autre de l'échantillon du milieu eₘ, entre un angle maximal haut αₘₐₓₕₐᵤₜ et un angle maximal bas α_{maxbas}.

Les distances eₕ et e_{b} correspondent à des points h et b de l'obstacle 0 ayant les plus petites distances par rapport au véhicule VR. Ils peuvent être rejoints par une droite virtuelle hb dont les coordonnées spatiales par rapport à la trajectoire sont désormais connues. Les droites peuvent donc être utilisées ensuite pour la détermination de la distance de visibilité latérale.

En définitive, en appliquant cette compression, pour chaque balayage par le capteur 6a ou 6b, il subsiste ainsi deux valeurs seulement ce qui est suffisant, dans le présent mode de mise en oeuvre de l'invention, pour une détermination fiable de la distance de visibilité. Bien entendu, il est possible de conserver davantage de valeurs pendant le traitement ultérieur de l'information, l'invention n'étant pas limitée au processus de compression que l'on vient de décrire.

L'étape E12 permet ainsi d'engendrer des jeux de coordonnées spatiales du profil en travers de la route qui, pour chaque point de relèvement comprennent deux tronçons latéraux, obtenus respectivement par l'intermédiaire des capteurs 6a et 6b, rejoints par un tronçon représentant la chaussée. Comme ces jeux de coordonnées spatiales sont rapportées à la base de corrélation de distance, il convient d'en effectuer une corrélation avec les jeux de coordonnées spatiales des profils en plan et en long qui, eux, sont rapportés à la base de corrélation du temps.

L'étape E13 du procédé consiste, à partir du contenu du fichier L de créer un nouveau fichier représentant le tracé en plan de l'itinéraire suivi par le véhicule VR. Ce fichier décrit en deux dimensions (plan X, Y), l'ensemble des points de relèvement de la trajectoire composés des données DGPS, de la distance curviligne et des coordonnées X et Y.

Une autre étape E14 de procédé consiste à effectuer une interpolation temporelle entre les jeux de coordonnées X, Y et Z (base de corrélation de temps) et les jeux de coordonnées du profil en travers (base de corrélation de distance) afin de créer un fichier descriptif de la voie de circulation dont les échantillons ne sont désormais rapportés qu'à la base de corrélation de temps.

Puis, au cours d'une étape E15, est créée l'image en plan de la route et des projection en plan des obstacles latéraux (figure 5D) au moyen d'un outil connu de conception assistée par ordinateur (CAO), à partir des fichiers créés au cours des étapes E13 et E14. L'image en plan conforme à la figure 5D montre ce qu'il est convenu d'appeler le "corridor de circulation" délimité par la chaussée de la route et les décors latéraux de part et d'autre de celle-ci comprenant les profils de tous les obstacles la bordant.

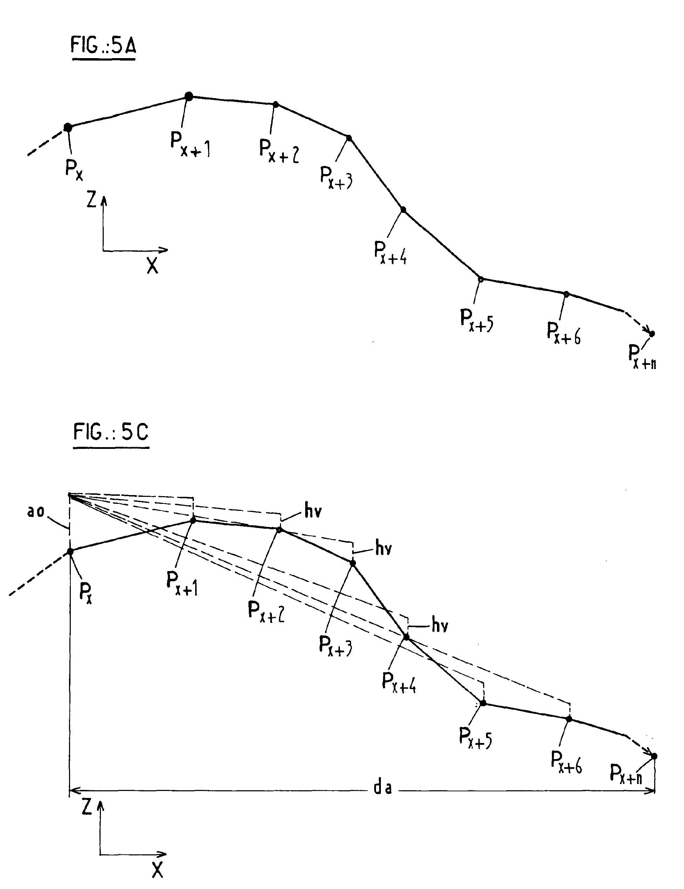

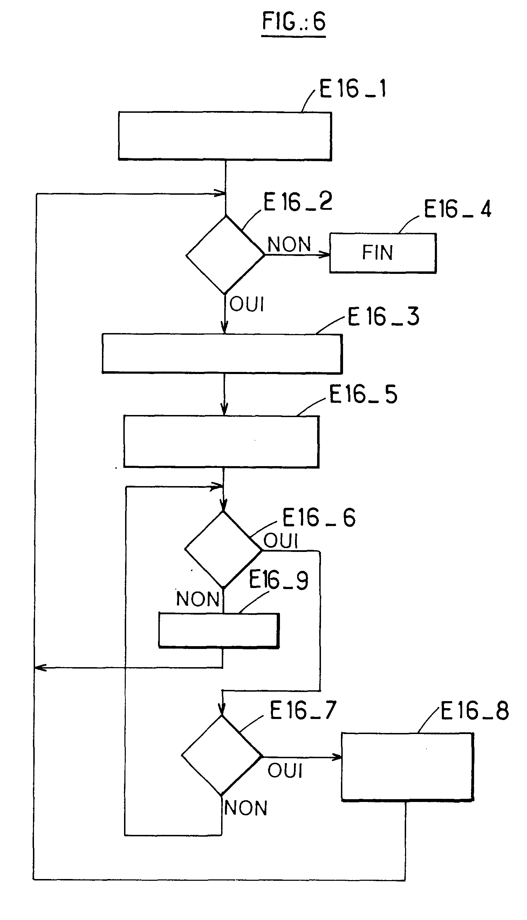

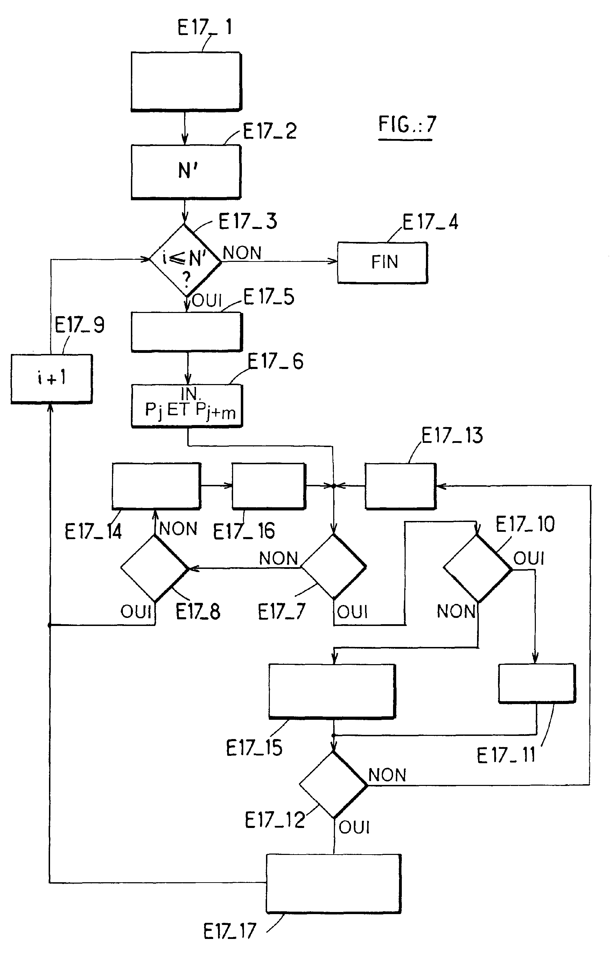

L'information obtenue par les opérations E11 et E15 est traitée par le programme pour calculer, respectivement pendant les étapes E16 et E17, les distances de visibilité relatives au profil en long de la route et aux profils en plan et en travers conformément aux diagrammes des figures 5C et 5D. Les figures 6 et 7 montrent de façon plus détaillée comment se déroulent respectivement les étapes E16 et E17.

Enfin l'étape E18 consiste à comparer les distances de visibilité calculées pendant les étapes E16 et E17, pour ne retenir dans chaque point de relèvement corrélé que la distance de visibilité ayant la valeur la plus faible.

Les échantillons des fichiers (E16-1, figure 6) obtenu à l'étape E11 sont lus successivement moyennant un test E16-2 permettant d'entrer dans une boucle de traitement qui sera parcourue jusqu'à ce que tous les échantillons représentant les points de prélèvement aient été traités.

Chaque point, par exemple le point Pₓ, majoré en altitude d'une valeur prédéterminée correspondant à l'altitude d'observation ao normalisée par rapport à la chaussée (1,05m par exemple, voir figure lA), est examiné en le comparant aux points aval Pₓ₊₁, Pₓ₊₂ etc., jusqu'à un point Pₓ₊ₙ écarté d'une distance curviligne prédéterminée da par rapport au point examiné Pₓ. La distance peut être choisie à 1 km par exemple et elle est prise en compte à l'étape E16-3. Chaque point situé en aval du point Pₓ est majoré en altitude de la hauteur de visée hv (figure 5C).

Si le test en E16-2 constate qu'il n'y a plus d'échantillons à examiner, toutes les distances de visibilité auront été déterminées pour le profil en long de la route et le programme prend fin en E16-4.

La distance da correspond à un certain nombre d'échantillons M qui est calculé à l'étape E16-5.

Au cours d'une procédure de test et de calcul, appliqué au point Pₓ sous examen, le programme détermine des droites entre ce point Pₓ et tous les points en aval sur la distance da, en respectant les hauteurs d'observation ao et de visée hv. Puis, on vérifie si ces droites coupent le profil en long.

Pour cela, au cours d'un test en E16-6, il est constaté s'il reste encore à examiner des sections du profil en long situées entre les M points dont on a déterminé le nombre au cours de l'étape E16-5. Tant que c'est le cas, un test en E16-7 examine s'il y a intersection avec le profil en long de la droite correspondante entre le point Pₓ et le point en aval qui est en cours d'examen. Si effectivement, il y a une intersection, la longueur curviligne de la section du profil en long est retenue comme distance de visibilité (étape E16-8) et le programme passe au point Pₓ₊₁ pour examiner ce point par rapport aux points d'une nouvelle distance da.

S'il n'y a pas intersection avec le profil en long, le programme retourne au test E16-6 et s'il y a encore une section entre le point Pₓ et un autre point à examiner, le test E16-7 est renouvelé.

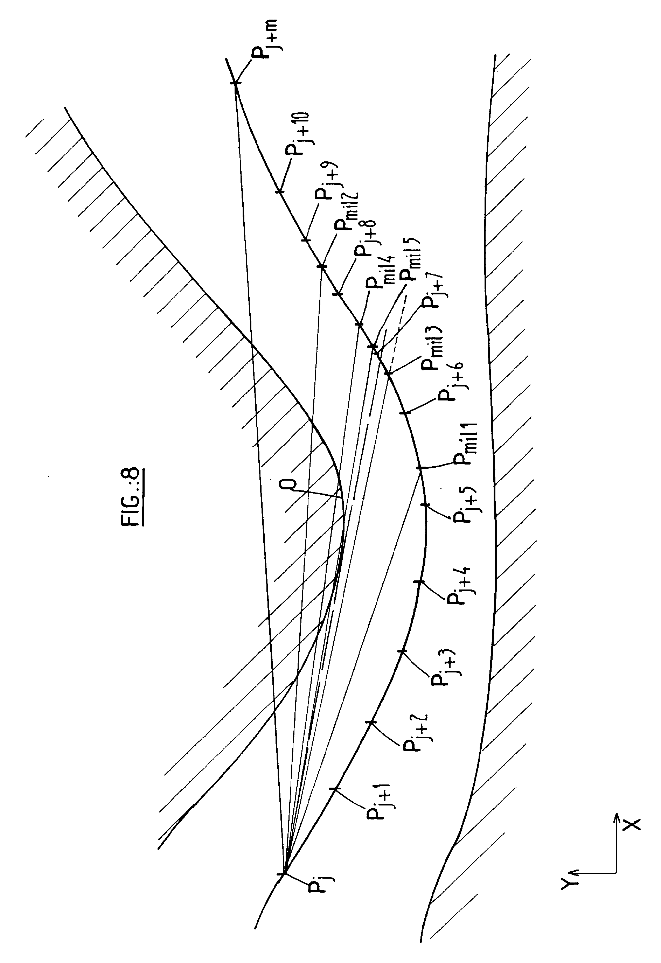

La figure 7 illustre les opérations devant être exécutées pour le déroulement de l'étape E 17 de la figure 4 et la figure 8 montre de façon abrégée, le calcul d'une distance de visibilité en un point quelconque de la trajectoire parcourue par le véhicule VR, sur le profil en plan et en travers de la route.

En E17-1, les données consignées dans les fichiers K et L sont lues, puis en E17-2, on détermine le nombre N' d'échantillons contenus dans le fichier K et correspondant aux points de relèvement pris au cours de la tournée de mesure. Chaque échantillon a un indice i qui augmente d'une unité chaque fois que la boucle de détermination d'une distance de visibilité au point considéré est parcourue pour fournir la distance de visibilité en ce point.

Par conséquent, par l'intermédiaire du test E17-3, il est déterminé s'il reste encore un point pour lequel une distance de visibilité doit être calculée. Si ce n'est pas le cas, le processus prend fin en E17-4. Dans le cas contraire, le processus entre dans la boucle de détermination de la distance de visibilité. Celle-ci met en oeuvre, en chaque point de relèvement de la trajectoire, un processus de calcul de la distance de visibilité par approximations successives dichotomiques.

Il est à noter cependant que la distance de visibilité relative aux profils en plan et en travers peut également être calculée d'une façon analogue à celle décrite ci-dessus à propos de la distance de visibilité du profil en long. Le processus de calcul par approximations successives dichotomiques présente l'avantage de nécessiter un temps de calcul nettement moindre, tout en assurant une précision de calcul satisfaisante en pratique.

Ainsi, en E17-5, il est d'abord déterminé un tronçon de trajectoire à étudier commençant par le point sous examen P, et allant jusqu'à un point Pⱼ₊ₘ éloigné du point sous examen Pⱼ d'une distance curviligne da prédéfinie qui peut être d'un km par exemple. Puis, en E17-6, on définit la droite entre les points Pⱼ et Pⱼ₊ₘ.

Le processus se poursuit avec un test en E17-7 consistant à vérifier si la droite définie en E17-6 présente un point commun avec le corridor calculé au cours de l'opération E15 (figure 4 et 5D). Autrement dit, il est recherché s'il y a intersection de la droite avec le corridor.

Si le test en E17-7 s'avère négatif, c'est que du point Pⱼ, l'observateur a une visibilité totale sur le tronçon Pⱼ-Pⱼ₊ₘ examiné. Par conséquent, il est procédé à un test en E17-8 pour vérifier s'il s'agit bien du tronçon initial Pⱼ-Pⱼ₊ₘ dont l'intersection avec le corridor vient d'être vérifiée. Si c'est le cas, on peut alors augmenter d'une unité le numéro de point i en E17-9 et la boucle de calcul est parcourue à nouveau à partir de l'étape E17-3.

En revanche, si le test en E17-7 s'avère affirmatif ou que le test en E17-8 s'avère négatif, c'est que, soit la visibilité au point Pᵢ est restreinte de sorte qu'il convient de commencer le calcul de la distance de visibilité dans ce point, soit le processus est déjà en train de calculer une distance de visibilité au point sous examen.

Le test en E17-7 étant affirmatif, il est également vérifié en E17-10, s'il s'agit du tronçon initial Pⱼ-Pⱼ₊ₘ ou non. Dans l'affirmative, on calcule en E17-11 le point milieu dit actuel P_{milieu-act} sur la distance curviligne entre les points Pⱼ et Pⱼ₊ₘ.

Il est alors procédé à un test en E17-12 pour vérifier si la distance curviligne entre le point P_{milieu-act} et le point aval actuel (en l'occurrence Pⱼ₊ₘ) est inférieur à un certain seuil qui est le seuil de résolution que l'on veut imposer au processus de calcul par approximations successives dichotomiques de la distance de visibilité. Si ce n'est pas le cas, le programme détermine la droite entre le point de relèvement sous examen Pⱼ et le point P_{milieu-act} et le test E17-7 est de nouveau exécuté.

Si la réponse à ce test est négative et celle en E17-8 l'est également, ou si le test en E17-12 est affirmatif et le test en E17-10 est négatif, le programme calcule par dichotomie, le nouveau point P_{milieu-act} en prenant la distance curviligne entre le point P_{milieu-act} pénultième et le point P_{milieu-act} antépénultième (étapes E17-14 et E17-15, respectivement), ce nouveau point se situant sur la trajectoire, selon le cas vers l'aval (branche de gauche de la boucle de la figure 7) ou vers l'amont (branche de droite de la boucle). L'étape E17-16 consiste à déterminer la droite à partir du point de relèvement sous examen et le point milieu calculé pendant l'étape E17-14.

Le test à l'étape E17-12 a pour but de mettre un terme aux approximations dichotomiques, si un certain seuil de précision est atteint. En fait, idéalement, la distance de visibilité correspondant au point Pⱼ sous examen est la tangente à partir de ce point Pⱼ à l'obstacle O, comme on peut le voir sur la figure 8. Ce seuil de précision peut être choisi librement. Par exemple, on peut décider qu'il est atteint si la distance curviligne entre le point calculé par l'opération E17-15 et le point milieu précédent est inférieure à la distance entre deux points de relèvement de la trajectoire sur le tronçon Pⱼ-Pⱼ₊ₘ.

Comme par ailleurs, le point d'intersection de la droite dressée en dernier lieu avant que le seuil de l'étape E17-17 ne soit franchi, ne coïncide pas forcément avec un point de relèvement de la trajectoire, on considère pour des raisons de sécurité que s'il n'y a pas coïncidence, la distance de visibilité pour le point Pⱼ est celle reliant ce point au point de relèvement de la trajectoire situé immédiatement en amont de ce point d'intersection.

La figure 8 représente un exemple de situation dans lequel le tronçon à examiner da comprend 11 points (m=10) et la distance de visibilité sera trouvée après cinq opérations de calcul du point milieu (Pₘᵢₗᵢₑᵤ₁ à Pₘᵢₗᵢₑᵤ₅). La distance de visibilité réelle sera la distance Pⱼ-Pⱼ₊₆ que l'on peut comparer à la distance de visibilité théorique formée par la tangente au corridor à partir du point Pj sous examen.

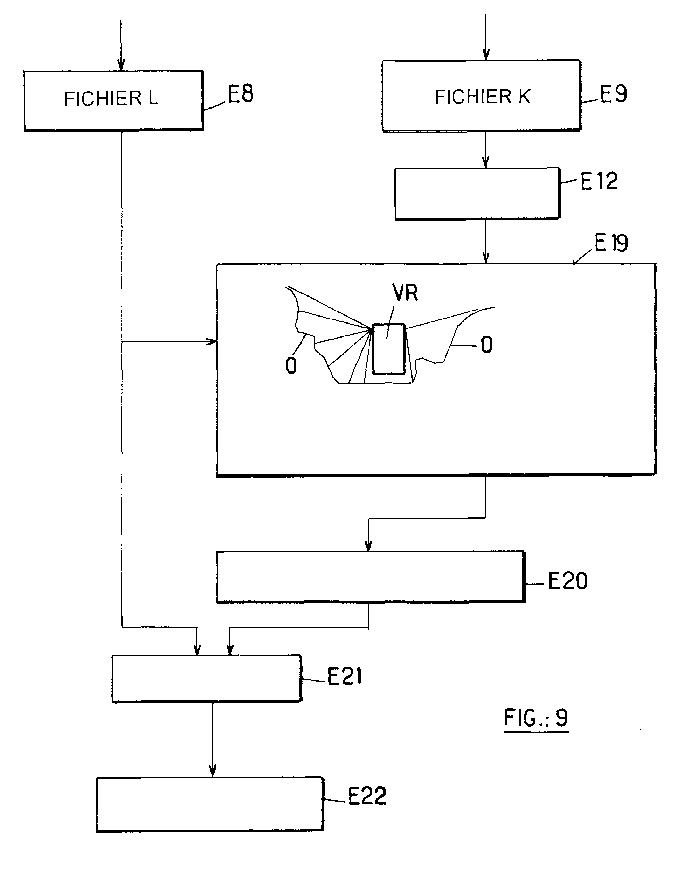

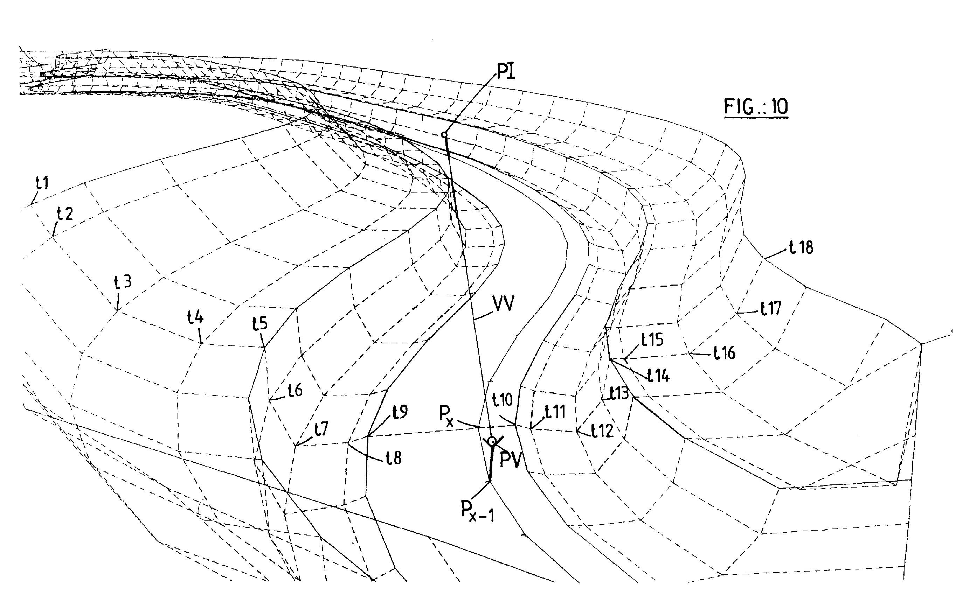

En se référant désormais aux figures 9 et 10, on va maintenant décrire un autre mode de mise en oeuvre de l'invention qui consiste à utiliser la méthode 3D déjà citée pour l'exécution de la deuxième phase de calcul.

La première phase de ce mode de mise en oeuvre est identique à celle décrite à propos de la figure 4. En d'autres termes, l'acquisition des fichiers K et L est obtenue par les étapes E1 à E9 du programme. Pour ce qui concerne le fichier K, l'étape de compression E12 peut lui être appliquée.

La seconde phase de ce mode de mise en oeuvre consiste à exécuter une étape E19 de création, pour chaque point de relèvement d'un jeux d'échantillons, ces jeux d'échantillons formant ensemble un modèle numérique de terrain dans lequel le véhicule s'est déplacé (voir figure 10). A cet effet, l'échantillonnage angulaire des capteurs 6a et 6b décrivant les positions relatives de tous les points du terrain bordant la route exprimés en angle et en distance, est transformé en des points de terrain directement exprimés en coordonnées X, Y et Z. Ceci est possible grâce au fait que la position du véhicule en coordonnées X, Y et Z est connue à chaque top de prise d'échantillon du fichier L. Cette étape E19 implique donc également un calcul de corrélation pour rapporter les données relevées pour le profil en travers à la base de corrélation de temps, comme dans le premier mode de mise en oeuvre du procédé de l'invention.

La transformation de l'échantillonnage angulaire implique d'appliquer à chaque valeur de coordonnée une valeur de correction constante qui tient compte du décalage spatial des capteurs 6a et 6b par rapport au centre inertiel C du véhicule (voir figure 5B pour la valeur de décalage v1 et v2 sur les axes Y et Z).

On obtient ainsi, un fichier décrivant à chaque top de la base de temps un jeux de points, exprimés en coordonnées X, Y et Z, composés des échantillons relevés respectivement par les capteurs 6a et 6b. Ce fichier peut être appelé fichier numérique du terrain", il constitue une représentation tridimensionnelle de celui-ci. Les points de l'un de ces jeux de points sont référencés par tl à t18 sur la figure 10. On voit qu'ils sont composés des points situés chaque fois dans un plan qui est perpendiculaire en le point de relèvement Pₓ considéré, à la direction d'avancement du véhicule.

L'étape E21 du procédé consiste ensuite introduire le fichier de représentation tridimensionnelle de terrain ainsi que le tracé de progression du véhicule dans un logiciel 3D connu en soi (tout logiciel de ce type du marché pouvant convenir), et cette opération créant virtuellement une image semblable à celle représentée sur la figure 10.

On exécute ensuite une étape E22 au cours duquel, pour chaque point de relèvement Pₓ, on calcule le point d'intersection d'un vecteur de visée W avec l'image virtuelle crée au cours de l'étape E21. L'origine de ce vecteur W est située dans le point de visée PV du point de relèvement considéré (ici Pₓ₋₁) et son point d'arrivée est son point d'intersection PI avec l'image du terrain. La distance de visibilité sera alors la distance PV-PI. On voit donc que par cette méthode, il suffit d'un seul calcul par point de relèvement pour obtenir le résultat recherché. Le calcul peut être effectué par dichotomie d'une manière semblable, mais adaptée à la représentation 3D, à celle déjà décrite ci-dessus à propos de la figure 8.

## Revendications

1. Procédé pour déterminer les distances de visibilité d'une voie de circulation caractérisé en ce qu'il consiste
- au cours d'une première phase de procédé (E1 à E9) se déroulant par déplacement le long de ladite voie:
- à relever les profils en long et en plan de ladite voie de circulation en prenant des premiers échantillons (fichier L) représentant les coordonnées spatiales de premiers points de relèvement successifs (Pₓ à Pₓ₊ₙ; Pⱼ à Pⱼ₊ₘ) sur le tracé de la voie de circulation,
- simultanément, à relever le profil en travers de ladite voie de circulation en prenant en des seconds points de relèvement successifs des seconds échantillons (fichier K) représentant, en ces seconds points, des coordonnées spatiales (h, b) décrivant des obstacles (0) présents latéralement par rapport à ladite voie;
- lesdits premiers et seconds échantillons étant affectés de bases de corrélation établies en fonction du temps écoulé depuis le début du déplacement, et/ou de la distance par rapport au point de départ du déplacement; et
- dans une seconde phase de procédé:
- à effectuer sur lesdits premiers et seconds échantillons une opération sélective de corrélation (E14; E19) pour rapporter toutes les coordonnées spatiales à l'une desdites bases de corrélation et à créer (E11, E15; E20, E21), en les points de relèvement correspondant à cette base, des jeux de coordonnées spatiales décrivant les profils en long, en plan et en travers de la voie de circulation, et
- à calculer (E16, E17; E22) les distances de visibilité en chacun des points de relèvement de la base de corrélation sur laquelle les échantillons ont été corrélés, en utilisant le jeu de coordonnées spatiales de ce point et ceux des points situés en aval sur ladite voie de circulation.

2. Procédé suivant la revendication 1, caractérisé en ce qu'il consiste à calculer (E16) pour chacun desdits points de relèvement (Pₓ à Pₓ₊ₙ), à partir dudit profil en long une première valeur de distance de visibilité, et à calculer (E17) pour chacun desdits points de relèvement (Pⱼ à Pⱼ₊ₘ), à partir d'une combinaison dudit profil en plan et dudit profil en travers une seconde valeur de distance de visibilité, à comparer (E18) les deux valeurs de distance de visibilité et à retenir comme valeur de distance de visibilité nominale en le point de relèvement considéré la valeur la plus faible.

3. Procédé suivant la revendication 1, caractérisé en ce qu'il consiste à engendrer (E21) à partir des données représentant lesdits profils en plan en long et en travers, une représentation tridimensionnelle et à calculer (E22) la distance de visibilité directement à l'aide de cette représentation tridimensionnelle.

4. Procédé suivant l'une quelconque des revendications 1 à 3, caractérisé en ce qu'au cours de ladite première phase de procédé, lesdits premiers et seconds échantillons sont enregistrés dans l'ordre de leur relèvement dans des fichiers (K et L) sur un support d'enregistrement.

5. Procédé suivant l'une quelconque des revendications 1 à 4, caractérisé en ce que ladite seconde phase de procédé est exécutée à l'aide desdits fichiers (K, L) à un endroit spatialement fixe.

6. Procédé suivant l'une quelconque des revendications 1 à 5, caractérisé en ce que lesdits premiers échantillons sont engendrés par odométrie (5) coordonnée aux données fournies par une centrale inertielle (4).

7. Procédé suivant l'une quelconque des revendications 1 à 6, caractérisé en ce que lesdits premiers échantillons sont engendrés par un système DGPS de localisation différentielle par satellite (2,3).

8. Procédé suivant l'une quelconque des revendications 1 à 7, caractérisé en ce qu'il consiste à engendrer lesdits seconds échantillons par télémétrie en émettant un rayonnement électromagnétique ou optique en direction des obstacles latéraux (0) et en détectant le rayonnement réfléchis par ceux-ci.

9. Procédé suivant la revendication 8, caractérisé en ce que les opérations d'émission et de détection du rayonnement sont effectués par des capteurs (6a, 6b) placés de part et d'autre du véhicule (VR).

10. Procédé suivant l'une quelconque des revendications 8 et 9, caractérisé en ce que lesdits seconds échantillons sont engendrés par balayage périodique du rayonnement sur lesdits obstacles (0) dans un secteur angulaire prédéterminé situé latéralement par rapport au véhicule (VR).

11. Procédé suivant la revendication 10, caractérisé en ce que ladite opération de balayage périodique est effectuée dans un plan incliné sur l'horizontale.

12. Procédé suivant l'une quelconque des revendications 8 à 11, caractérisé en ce qu'il consiste à ne retenir pour le relevé dudit profil en travers que certains échantillons obtenus au cours de chaque opération de balayage.

13. Procédé suivant l'une quelconque des revendications 1, 2 et 4 à 12, caractérisé en ce que pour calculer les distances de visibilité du profil en long, il consiste pour chaque point (Pₓ) de relèvement du profil en long, à relier ce point (Pₓ) successivement à des points de relèvement Pₓ₊₁ à Pₓ₊ₙ) situés en aval par des droites et à retenir comme distance de visibilité de ce point sous examen, toute distance entre ce point et un point de relèvement où une droite coupe ledit profil en long.

14. Procédé suivant la revendication 13, caractérisé en ce que lesdites droites ont comme première extrémité (Pₓ+ao) un point situés au-dessus de ladite voie de circulation à une hauteur prédéterminée (ao) et à l'aplomb du point de relèvement (Pₓ) considéré et en ce que lesdits droites ont une seconde extrémité (Pₓ₊ᵢ+hv...) située à une hauteur prédéterminée (hv) au-dessus de ladite voie de circulation et à l'aplomb du point de relèvement (Pₓ₊₂,...) en aval correspondant.

15. Procédé suivant l'une quelconque des revendication 1, 2 et 4 à 14, caractérisé en ce que les distances de visibilité sont déterminées à partir des profil en plan et en travers par approximations successives dichotomiques.

16. Procédé suivant l'une quelconque des revendications 4 à 15, lorsqu'elles dépendent de la revendication 3, caractérisé en ce qu'il consiste à calculer pour chaque point de relèvement, le point d'intersection d'un vecteur de visée (W) avec l'image virtuelle, l'origine dudit vecteur (W) étant situé dans le point de visée (PV) du point de relèvement considéré et son point d'arrivée étant son point d'intersection (PI) avec l'image du terrain.
